# EUROPÄISCHE PATENTSCHRIFT

(11) **EP 0 548 592 B1**
(45) Veröffentlichungstag und Bekanntmachung des Hinweises auf die Patenterteilung: **08.11.1995**
(21) Anmeldenummer: 92120387.3
(22) Anmeldetag: 28.11.1992
(51) Int. Cl.: G02B 6/44

(54) **Verfahren zur Herstellung eines Lichtwellenleiterkabelelementes**
Method of making a fibre optic cable element
Méthode de fabrication d'un élément d'un câble à fibre optique

(30) Priorität: 13.12.1991 DE 4141091
(43) Veröffentlichungstag der Anmeldung: 30.06.1993
(73) Patentinhaber: kabelmetal electro GmbH, 30002 Hannover (DE); ALCATEL N.V., NL-1077 XX Amsterdam (NL)
(72) Erfinder: Ziemek, Gerhard, Dr.-Ing., W-3012 Langenhagen (DE)

(56) Entgegenhaltungen:
- EP-A- 0 091 717
- EP-A- 0 109 695
- EP-A- 0 299 123
- PATENT ABSTRACTS OF JAPAN vol. 8, no. 141 (P-283)30. Juni 1984 & JP-A-59 040 604

## Beschreibung

Die Erfindung betrifft ein Verfahren zur Herstellung eines Lichtwellenleiterkabelelementes mit einer Vielzahl von Lichtwellenleitern, die mit Überlänge innerhalb eines druckfesten Metallrohres angeordnet sind, wobei innerhalb des Metallrohres Mittel zum Schutz der Lichtwellenleiter und zum Längsabdichten vorgesehen sind.

Lichtwellenleiterkabel mit einer Vielzahl von Lichtwellenleitern, die in einem druckfesten Metallrohr angeordnet sind, werden bevorzugt als Unterwasserkabeln eingesetzt. Da die Spleißung von Unterwasserkabeln unsicher und aufwendig ist, ist man bestrebt, große Längen in einem Stück zu fertigen. Da das Einbringen der Lichtwellenleiter in vorgefertigte Rohre von großer Länge nicht möglich ist, verbleibt als einzige Möglichkeit die kontinuierliche Ummantelung von Lichtwellenleitern mit längsnahtgeschweißten Rohren, d.h. das Einbringen der Lichtwellenleiter in ein noch offenes Schlitzrohr.

Ein solches Verfahren wird in der EP-A-0 - 299 123 beschrieben. Ein von einer Vorratsspule abgezogenes Metallband vorzugsweise aus rostfreiem Stahl wird in mehreren Formstufen allmählich zum Schlitzrohr geformt. In das noch offene Schlitzrohr werden die Lichtwellenleiter eingefahren und die Längsnaht des Schlitzrohres verschweißt. Als Schweißverfahren wird das Laserschweißen eingesetzt. Nach dem Schweißen wird das Metallrohr in seinem Durchmesser reduziert, wobei die Zugkraft durch eine Ziehtrommel aufgebracht wird. Die Überlänge der Lichtwellenleiter wird dadurch erzeugt, daß die Lichtwellenleiter durch ein gesondertes Rohr, welches innerhalb des geschweißten und gezogenen Rohres verläuft, in das Rohr eingeführt werden, dessen Ende sich bis in den Bereich der Ziehtrommel erstreckt. Durch das Rohr wird ein Gas geleitet, welches die Lichtwellenleiter beim Durchlaufen des Rohres "schmiert" und dafür sorgt, daß die Lichtwellenleiter sich am äußeren Kreisbogen des geschweißten Rohres anlegen. Zum Längsabdichten des Lichtwellenleiterkabels ist ein weiteres Rohr vorgesehen, welches sich im Innern des geschweißten Rohres bis in den Bereich der Ziehtrommel erstreckt. Dieses zweite Rohr ist länger als das die Lichtwellenleiter führende Rohr und transportiert eine gelartige Masse in das geschweißte Rohr, welches den Freiraum zwischen den Lichtwellenleitern und der Innenwand des geschweißten Rohres ausfüllt. Die Fertigungsgeschwindigkeit wird mit ca. 20 m/min angegeben. Für eine Länge von 100 km sind über drei Tage erforderlich. Da jeder Fertigungsstop mit einer erhöhten Fehlerrate behaftet ist, ist man bestrebt, die zu fertigende Länge ohne anzuhalten fertigzustellen. Das bekannte Verfahren weist eine Reihe von Nachteilen auf. So kann die Handhabung der Lichtwellenleiter, d.h. das Abwickeln, das Hindurchführen durch das Rohr sowie das Anblasen mit Luft zu einem Brechen der Glasfaser führen, obwohl diese mit einer Kunststoffschicht (coating) beschichtet ist. Für manche Anwendungsfälle reicht die bei diesem Verfahren zu erzielende Überlänge nicht aus. Die Überlänge ist abhängig vom Außendurchmesser und der Wanddicke des geschweißten Rohres. Die Längsabdichtung ist ebenfalls nicht kontrollierbar. Zusammenfassend ist also festzustellen, daß bei diesem Verfahren Fehler erst am fertigen Kabel, d.h. nach mehr als drei Tagen, festgestellt werden können.

Der vorliegenden Erfindung liegt von daher die Aufgabe zugrunde, ein Verfahren zur Herstellung eines Lichtwellenleiterkabelelementes der eingangs erwähnten Art anzugeben, bei welchem die Anfälligkeit gegen Fehler wesentlich geringer ist. Insbesondere soll es möglich sein, durch Zwischenprüfung Fehler aus der Vorproduktion zu erkennen und das fehlerhafte Produkt zu ersetzen.

Diese Aufgabe wird dadurch gelöst, daß die Lichtwellenleiter einen Strang bilden, in einer weichen, kompressiblen Masse eingebettet werden, und die Lichtwellenleiter mit Überlänge in dem Strang vorliegen, daß nach dem Umgeben des Stranges mit den Metallband ein Abstand zwischen dem Strang und dem Rohr verbleibt, und daß durch das Ziehen des Rohres das Rohr so weit auf den Strang heruntergezogen wird, daß der Außendurchmesser des Stranges dem Innendurchmesser des Metallrohres im fertigen Kabel nahezu entspricht.

Der Strang mit den eingebetteten Lichtwellenleitern läßt sich problemlos herstellen. Beispielsweise könnte der Strang eine Bündelader sein, d.h. ein Röhrchen aus einem weichen Kunststoff, in welchem mehrere Lichtwellenleiter mit Überlänge sowie eine gelartige Masse befindlich ist. Derartige Stränge bzw. Bündeladern sind bei der Verarbeitung in einer Rohrschweißanlage nicht so empfindlich wie die ungeschützten Lichtwellenleiter. Durch das Formen des Metallbandes zu einem Schlitzrohr mit größerem Durchmesser als der Strang wird vermieden, daß die Schweißwärme den Strang und damit die Lichtwellenleiter beschädigt. Durch das nachfolgende Herunterziehen des Metallrohres auf den Strang wird dieser in dem Rohr festgelegt und das Rohrinnere gleichzeitig längsabgedichtet. Da die Fertigungsgeschwindigkeit durch den Arbeitsgang Schweißen begrenzt ist, ergibt sich aus dem Arbeitsgang Ziehen eine Erhöhung der Fertigungsgeschwindigkeit.

Nach einer besonders vorteilhaften Weiterbildung der Erfindung werden die Lichtwellenleiter in Form eines oder mehrerer Bändchenkabel in dem Strang eingebettet derart, daß die Bändchenkabel gleichsinnig oder mit wechselnder Richtung um die Längsachse tordiert sind. Unter einem Bändchenkabel wird ein Gebilde aus mehreren in einer Ebene parallel nebeneinander verlaufenden Lichtwellenleiter verstanden, die durch eine gemeinsame Kleberschicht zusammengehalten sind. Solche Bändchenkabel sind wesentlich preiswerter herstellbar als zum Beispiel Bündeladern und sind darüber hinaus für die sogenannte Massenspleißung geeignet. Durch die Torsion der Bändchenkabel ergibt sich die gewünschte Überlänge für die Lichtwellenleiter gegenüber dem Strang und damit gegenüber dem geschweißten und gezogenen Rohr.

Zweckmäßigerweise werden die Lichtwellenleiter bzw. die Bändchenkabel in einem Strang aus weichem Schaumstoff eingebettet. Dieses Material schützt die Lichtwellenleiter während der Herstellung und gewährleistet, daß sich die Lichtwellenleiter innerhalb des Rohres verlagern können. Geeignete Schaumstoffe sind Polyurethanschaum, Polyethylenschaum u.ä.

Mit besonderem Vorteil wird die Schaumstoffschicht durch Extrusion auf den Lichtwellenleitern erzeugt. Für diese Anwendung ist ein Polyethylenschaum geeignet.

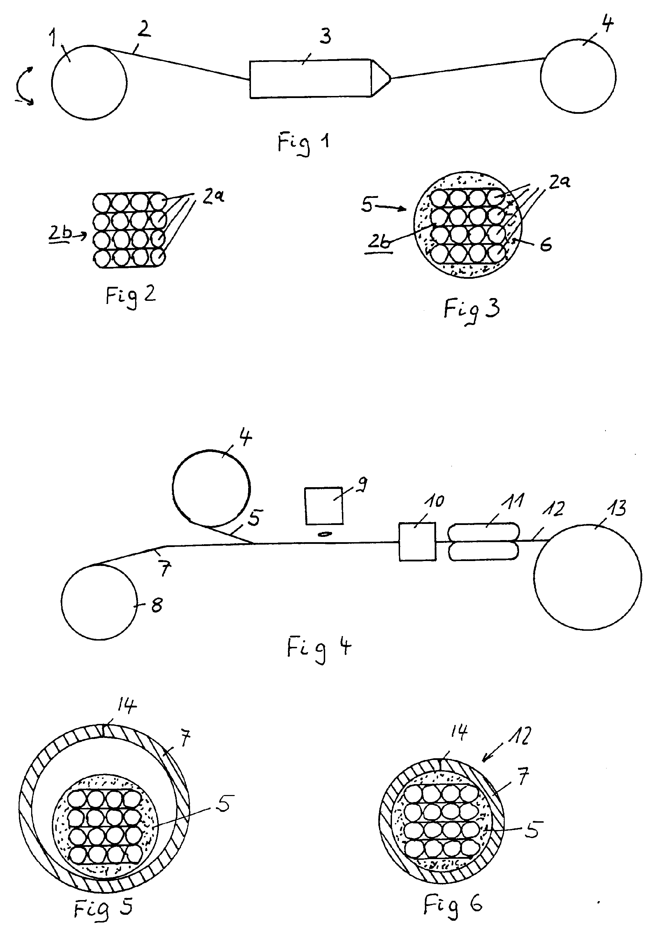

Die Erfindung ist anhand der in den Figuren 1 bis 7 schematisch dargestellten Ausführungsbeispiele näher beschrieben.

Von einer Vorratsspule 1 werden Lichtwellenleiter 2 kontinuierlich abgezogen, in einer Schaumextrusionsanlage 3 mit einer Schaumschicht versehen und auf eine Spule 4 aufgewickelt. Bei den Lichtwellenleitern 2 handelt es sich vorzugsweise um ein oder mehrere Bändchenkabel 2a bzw. um einen aus mehreren Bändchenkabeln 2a bestehenden Bändchenstapel 2b. Die Vorratsspule 1 wird während der Fertigung gedreht, so daß die Bändchenkabel 2a bzw. der Bändchenstapel 2b um seine Längsachse tordiert in die Schaumextrusionsanlage 3 einläuft. Die Drehrichtung des oder der Bändchen 2a kann wechseln, wie es die Pfeile angeben, so daß das oder die Bändchenkabel 2a bzw. der Bändchenstapel 2b über ihre bzw. seine Länge gesehen, wechselweise eine bestimmte Strecke im Uhrzeigersinn und daran anschließend im Gegenüberzeigersinn tordiert ist. In diesem Fall ergibt sich eine SZ-Torsion, bei der die Vorratstrommel 1 stationär arbeitet. Die SZ-Torsion wird durch eine nicht dargestellte vor der Schaumextrusionsanlage 3 angeordnete wechselweise angetriebene Führung erzeugt. Der aus der Schaumextrusionsanlage 3 herauskommende Strang 5 besteht aus den einzelnen Bändchen 2a bzw. dem Bändchenstapel 2b sowie der im Querschnitt nahezu kreisrunden Schaumstoffschicht 6.

Der in Figur 3 im Schnitt dargestellte Strang 5 ist also ein Element, in welchem die Lichtwellenleiter 2 aufgrund der Torsion des Bändchenstapels 2b bzw. der Bändchenkabel 2a mit Überlänge in einer weichelastischen Schaumstoffschicht 6 eingebettet sind. Dadurch, daß die Lichtwellenleiter 2 in Bändchenform von der Vorratsspule 1 abgewickelt und der Schaumextrusionsanlage 3 zugeführt werden, muß nicht befürchtet werden, daß die empfindlichen Glasfasern brechen. Durch die Einbettung in der Weichschaumstoffschicht 6 wird eine weitere Schutzschicht aufgebaut.

In einem nächsten Arbeitsschritt wird der Strang 5 von einem Metallband 7 kontinuierlich umhüllt. Das von einer Vorratsspule 8 ablaufende Metallband 7, welches aus Korrosionsgründen aus nichtrostendem Stahl besteht, wird in nicht näher beschriebener Weise zu einem Schlitzrohr geformt, in welches der Strang 5 einläuft. Die Bandkanten des Schlitzrohres werden in Kontakt miteinander gebracht und der Schlitz mit einer Laserschweißmaschine 9 verschweißt. Bei der Formung des Schlitzrohres ist darauf zu achten, daß der Innendurchmesser des Schlitzrohres größer ist als der Außendurchmesser des Stranges 5, damit der Strang durch die Schweißwärme nicht beschädigt wird. Das geschweißte Rohr wird dann mittels einer Zieheinrichtung 10, zweckmäßigerweise eine Ziehmatrize auf den Außendurchmesser des Stranges 5 heruntergezogen. Die hierfür erforderliche Ziehkraft bringt ein sogenannter Spannzangenabzug 11 auf. Das nun fertige Lichtwellenleiterkabel 12 kann auf eine Kabeltrommel 13 aufgewickelt werden.

In der Figur 5 ist der Zustand kurz vor bzw. beim Schweißen im Schnitt dargestellt. Das Metallband 7 ist zu einem Rohr mit Schlitz 14 geformt, dessen Innendurchmesser erheblich größer ist als der Außendurchmesser des Stranges 5.

Die Figur 6 zeigt das fertige Kabel 12. Das aus dem Metallband 7 geformte und längs des Schlitzes 14 verschweißte Rohr ist auf den Strang 5 aufgezogen. Das Kabel 12 ist somit längswasserdicht. Bei einer Biegung des Kabels erlaubt der weiche Schaum 6, daß die Torsion des Bändchenstapels 2b teilweise verringert wird. Darüber hinaus kann sich der Bändchenstapel 2b innerhalb des Rohres verlagern, wodurch zusätzlich eine bestimmte Überlänge bereitgestellt wird.

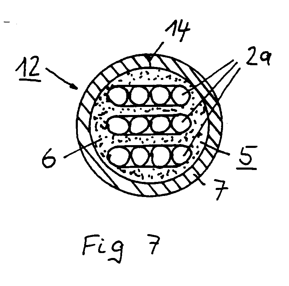

Die Figur 7 zeigt ein weiteres Ausführungsbeispiel eines Kabels 12, welches nach der Lehre der Erfindung hergestellt wurde. Die Bändchenkabel 2a wurden hier von getrennten Vorratsspulen, die um eine gemeinsame Achse rotieren, der Schaumextrusionsanlage 3 zugeführt, und durch eine nicht näher dargestellte ebenfalls umlaufende Führung vor dem Einlauf in die Schaumextrusionsanlage 3 in Abstand zueinander gehalten, so daß die einzelnen Bändchenkabel 2a allseitig von der Schaumstoffschicht 6 umgeben sind. Bei diesem Kabel ist die Pufferung der Lichtwellenleiter 2 noch besser, jedoch muß man in Kauf nehmen, daß u.U. ein Bändchenkabel 2a weniger in dem Kabel 12 untergebracht werden kann.

Mit dem erfindungsgemäßen Verfahren konnte ein Kabelelement in einem Stück fehlerfrei gefertigt werden, das folgende Abmessungen aufwies:
Anzahl der Bändchenkabel: 4
Anzahl der Lichtwellenleiter pro Bändchenkabel: 4
Durchmesser des Stranges: 1,9 mm
Wanddicke des Stahlbandes: 0,2 mm
Außendurchmesser des Kabels: 2,3 mm

Dieses Kabelelement kann entsprechend den Anforderungen an das gesamte Kabel mit Armierungsdrähten und einem Isolationsmaterial zu einem gebrauchsfertigen Unterwasserkabel aufgebaut werden.

## Patentansprüche

1. Verfahren zur Herstellung eines
Lichtwellenleiterkabelelementes mit einer Vielzahl von Lichtwellenleitern, die mit Überlänge innerhalb eines druckfesten Metallrohres angeordnet sind, wobei innerhalb des Metallrohres Mittel zum Schutz der Lichtwellenleiter und zum Längsabdichten vorgesehen sind, in dem die Lichtwellenleiter in kontinuierlicher Arbeitsweise von einem Metallband rohrförmig umgeben werden, der verbleibende Schlitz verschweißt und das Rohr gezogen und damit im Durchmesser verringert wird, dadurch gekennzeichnet, daß
die Lichtwellenleiter einen Strang bilden, in einer weichen bzw. kompressiblen Masse eingebettet werden, und die Lichtwellenleiter mit Überlänge in dem Strang vorliegen, daß nach dem Umgeben des Stranges mit dem Metallband ein Abstand zwischen dem Strang und dem Rohr verbleibt, und daß durch das Ziehen des Rohres das Rohr so weit auf den Strang heruntergezogen wird, daß der Außendurchmesser des Stranges dem Innendurchmesser des Metallrohres im fertigen Kabel nahezu entspricht.

2. Verfahren nach Anspruch 1, dadurch gekennzeichnet, daß die Lichtwellenleiter in Form eines oder mehrerer Bändchenkabel in dem Strang eingebettet werden derart, daß die Bändchenkabel gleichsinnig oder mit wechselnder Richtung um ihre Längsachse tordiert sind.

3. Verfahren nach Anspruch 1 oder 2, dadurch gekennzeichnet, daß die Lichtwellenleiter in einem Strang aus weichem Schaumstoff eingebettet werden.

4. Verfahren nach Anspruch 3, dadurch gekennzeichnet, daß die Schaumstoffschicht durch Extrusion auf den Lichtwellenleitern erzeugt wird.

## Claims

1. Process for producing an optical waveguide cable element having a multiplicity of optical waveguides which are arranged with excess length within a pressure-resistant metal tube, means being provided within the metal tube for protecting the optical waveguides and for longitudinal sealing, in which process the optical waveguides are continuously surrounded in a tubular form by a metal strip, the remaining slit is welded and the tube is drawn and consequently reduced in diameter, characterized in that the optical waveguides form a strand, are embedded in a soft or compressible composition, and the optical waveguides are in the strand with excess length, in that, after surrounding the strand with the metal strip, a distance remains between the strand and the tube and in that, by drawing the tube, the tube is drawn down onto the strand to such an extent that the outside diameter of the strand virtually corresponds to the inside diameter of the metal tube in the finished cable.

2. Process according to Claim 1, characterized in that the optical waveguides are embedded in the strand in the form of one or more ribbon cables in such a way that the ribbon cables are twisted in the same direction or with alternating direction about their longitudinal axis.

3. Process according to Claim 1 or 2, characterized in that the optical waveguides are embedded in a strand of flexible foam.

4. Process according to Claim 3, characterized in that the foam layer is produced by extrusion onto the optical waveguides.

## Revendications

1. Procédé de fabrication d'un élément de câble de guides d'ondes lumineuses comportant une pluralité de guides d'ondes lumineuses qui sont disposés, avec surlongueur, à l'intérieur d'un tube métallique résistant à la pression, procédé dans lequel, à l'intérieur du tube métallique, sont prévus des moyens pour la protection des guides d'ondes lumineuses et pour l'étanchéité longitudinale, en ce sens qu'en un mode de travail continu on entoure d'une bande métallique en forme de tube les guides d'ondes lumineuses, que l'on soude la fente subsistante et que l'on étire le tube et qu'on le réduit donc en diamètre, caractérisé par le fait que les guides d'ondes lumineuses forment un cordon continu qu'on les enrobe dans une masse molle ou compressible et que les guides d'ondes lumineuses se présentent dans le cordon continu avec surlongueur, qu'après que le cordon continu a été entouré de la bande métallique, il subsiste une distance entre le cordon continu et le tube, et que, par l'étirage du tube, le tube s'applique suffisamment sur le cordon continu pour que le diamètre extérieur du cordon continu corresponde approximativement au diamètre intérieur du tube métallique dans le câble fini.

2. Procédé selon la revendication 1, caractérisé par le fait que l'on enrobe les guides d'ondes lumineuses, sous forme d'un ou de plusieurs câbles de rubans, dans le cordon continu de façon que les câbles de ruban soient tordus autour de l'axe longitudinal soit dans le même sens, soit en sens inverse.

3. Procédé selon la revendication 1 ou 2, caractérisé par le fait que l'on enrobe les guides d'ondes lumineuses dans un cordon continu de plastique mousse mou.

4. Procédé selon la revendication 3, caractérisé par le fait que l'on produit la couche de plastique mou par extrusion sur les guides d'ondes lumineuses.
